Europäisches Patentamt

European Patent Office

Office européen des brevets

(11) Veröffentlichungsnummer: **0 503 366 A1**

# (12) EUROPÄISCHE PATENTANMELDUNG

(21) Anmeldenummer: **92103232.2**

(51) Int. Cl.5: **B01D 53/34**

(22) Anmeldetag: **26.02.92**

(30) Priorität: **14.03.91 DE 4108200**

(43) Veröffentlichungstag der Anmeldung:
**16.09.92 Patentblatt 92/38**

(84) Benannte Vertragsstaaten:
**AT BE DE DK FR GB IT NL SE**

(71) Anmelder: **Fette, Dietrich**
**Max-Planck-Strasse 89**
**W-4902 Bad Salzuflen(DE)**

(72) Erfinder: **Fette, Dietrich**
**Max-Planck-Strasse 89**
**W-4902 Bad Salzuflen(DE)**

(74) Vertreter: **Depmeyer, Lothar**
**Auf der Höchte 30**
**W-3008 Garbsen 1(DE)**

(54) Verfahren zur Senkung des Stickoxid- und Schwefeloxidgehaltes in Feuerungsabgasen.

(57) Die Erfindung betrifft ein Verfahren zur Senkung des Stickoxid- und Schwefeloxidgehaltes in Feuerungsabgasen durch Zumischen von Ammoniak zur Verbrennungsluft. Der Erfindung liegt die Aufgabe zugrunde, bei bestimmten Verarbeitungsprozessen anfallendes Ammoniak zu benutzen und zugleich dafür zu sorgen, dass ein Entweichen von Ammoniak weitgehend ausgeschaltet wird. Zur Lösung dieser Aufgabe werden erfindungsgemäss bei der Zuckergewinnung aus Zuckerrüben entstehende Brüden und Abgase zugemischt.

EP 0 503 366 A1

Rank Xerox (UK) Business Services

Die Erfindung betrifft ein Verfahren zur Senkung des Stickoxid- und Schwefeloxidgehaltes in Feuerungsabgasen.

Die Erfindung geht weiterhin von solchen Verfahren dieser Art aus, bei denen die Reduzierung durch Zumischen von Ammoniak zur Verbrennungsluft erfolgt. Dabei kann Ammoniak nach bekannten Vorbildern der Verbrennungsluft, z.B. in den Feuerkegel oder in die Nähe des Feuerkegels der Verbrennungskammer zugesetzt werden, wobei das Zumischen auch durch Ringdüsen oder ähnliche Einrichtungen geschehen kann, jedoch sind die Art und Weise einer solchen Zumischung nicht Gegenstand der Erfindung.

Bei den bekannten Verfahren dieser Art wird Ammoniak extra bereitgestellt und so den Feuerungsabgasen zugemischt.

Der Erfindung liegt die Aufgabe zugrunde, das in bestimmten Verarbeitungsprozessen anfallende Ammoniak zu benutzen und zugleich dafür Sorge zu tragen, dass bei diesen Prozessen ein Entweichen des Ammoniaks unter Gefährdung der Umwelt weitgehend ausgeschaltet wird.

Zur Lösung dieser Aufgabe werden erfindungsgemäss der Verbrennungsluft die bei der Zuckergewinnung aus Zuckerrüben entstehenden Brüden oder Abgase zugemischt, ausgehend von der Erkenntnis, dass bei dieser Zuckergewinnung infolge der Stickstoffdüngung mit der Rübenverarbeitung Ammoniak freigesetzt wird. Zweckmässigerweise wird dabei solches Ammoniak genutzt, das aus ammoniakhaltigen Kondensaten durch vorzugsweise thermische oder chemische Desorption ausgetrieben wird. Dabei kann auch die Ammoniakkonzentration in den Gas-Wasserdampfgemischen durch Rektifikationsverfahren ( sog. Strippen ) oder durch chemische Verfahren vor dem Zumischen zur Verbrennungsluft erhöht werden.

Damit wird sichergestellt, dass bei Zusatz von Ammoniak in die Feuerung - insb. natürlich in die Feuerungsanlagen der zugehörigen Zuckergewinnungsanlage - die Stickoxide in umweltneutrale Reaktionsprodukte ( Stickstoff und Wasser ) aufgespalten werden. Übriges Ammoniak wird durch Schwefeloxid - sofern durch Öl- oder Kohleverbrennung vorhanden - gebunden, wodurch eine weitere günstige Wirkung entsteht.

Die bei der Zuckergewinnung anfallenden Abgase und Brüden können an sich an beliebigen Stellen des Herstellungsprozesses entnommen und dann im vorgenannten Sinne weitergeleitet werden, insb. erfolgt die Entnahme jedoch an den Entlüftungen der Kalkungsapparate, der Saturationsapparate, der Wärmeübertragerheizkammern, der Verdampferheizkammern, der Kochapparate und im Bereich der Kondensataufbereitung.

Ausserdem versteht es sich, dass die erwähnten Brüden und Abgase insb. der der Zuckergewinnungsanlage zugeordneten Feuerung der Kesselanlage zugeleitet werden, um so die Verbrennungsabgase dieser Anlage zu beeinflussen.

Um die Brüden oder Abgase ableiten zu können, erhalten die oben erwähnten Produktionsvorrichtungen im Bereich ihrer Entlüftungen besondere, ggfs. aber auch eigene Anschlüsse für das Ableiten.

## Patentansprüche

1. Verfahren zur Senkung des Stickoxid- und Schwefeloxidgehaltes in Feuerungsabgasen durch Zumischen von Ammoniak zur Verbrennungsluft , dadurch gekennzeichnet, dass bei der Zuckergewinnung aus Zuckerrüben entstehende Brüden und Abgase zugemischt werden.

2. Verfahren nach Anspruch 1, dadurch gekennzeichnet, dass die in der Extraktreinigung und Extrakteinengung der Zuckergewinnung anfallenden Brüden und Abgase verwendet werden.

3. Verfahren nach Anspruch 1, dadurch gekennzeichnet, dass die Brüden und Abgase der Feuerung bzw. der Verbrennungsluft derjenigen Kesselanlage zugeleitet werden, die an der Erzeugung der Brüden bzw. Abgase beteiligt ist.

4. Verfahren nach Anspruch 1, dadurch gekennzeichnet, dass der Verbrennungsluft Ammoniak zugesetzt wird, das aus ammoniakhaltigen Kondensaten durch vorzugsweise thermische oder chemische Desorption ausgetrieben wird.

5. Verfahren nach Anspruch 1, dadurch gekennzeichnet, dass die Konzentration des Ammoniaks in den Gas-Wasserdampfgemischen durch Rektikationsverfahren ( sog. Strippen ) oder durch chemische Verfahren vor dem Zumischen zur Verbrennungsluft erhöht wird.

6. Vorrichtung zur Durchführung des Verfahrens nach Anspruch 1, dadurch gekennzeichnet, dass an den Kalkungsapparaten, Saturationsapparaten, Wärmeübertragerheizkammern, Verdampferheizkammern, Kochapparaten und den Einrichtungen zur Kondensataufbereitung vorzugsweise im Bereich ihrer Entlüftungen Anschlüsse zum Ableiten von Ammoniak vorgesehen sind.

7. Vorrichtung nach Anspruch 6, dadurch gekennzeichnet, dass die Anschlüsse ( Anschluss ) an einem oder mehreren der Produktionsvorrichtungen gemäss Anspruch 6 vorgesehen sind.

8. Vorrichtung nach Anspruch 6, dadurch gekennzeichnet, dass an den Produktionsvorrichtungen gemäss Anspruch 6 gesonderte Anschlüsse zum Ableiten vorgesehen sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 122 423 (LINDE AG)<br>* Seite 4, Zeile 25 – Seite 5, Zeile 7; Ansprüche 1-6 *<br>--- | 1-5 | B01D53/34 |
| Y | DD-A-201 029 (INST. FÜR FORSCH. UND RATION. DER ZUCKERIND.)<br>* Seite 3, Zeile 9 – Zeile 19 *<br>--- | 1,2,5 | |
| Y | DD-A-145 545 (INST. FÜR FORSCH. UND RATION. DER ZUCKERIND.)<br>* Seite 2, Zeile 19 – Zeile 24; Ansprüche 1-3 *<br>--- | 4 | |
| Y | DE-A-3 916 597 (HÖLTER)<br>* Ansprüche 1,2 *<br>--- | 3 | |
| A | DD-A-201 028 (INST. FÜR FORSCH. UND RATION. DER ZUCKERIND.)<br>* Seite 2, Zeile 12 – Zeile 17; Ansprüche 1-3 *<br>--- | 1,2,5 | |
| A | DE-B-2 938 654 (DIDIER ENGINEERING GMBH)<br>* Ansprüche 1-6 *<br>--- | 1,5 | **RECHERCHIERTE SACHGEBIETE (Int. Cl.5)** |
| A | DD-A-291 780 (INST. FÜR FORSCH. UND RATION. DER ZUCKERIND.)<br>* Anspruch 1 *<br><br>----- | 1 | B01D |

Der vorliegende Recherchenbericht wurde für alle Patentansprüche erstellt

| Recherchenort | Abschlußdatum der Recherche | Prüfer |
|---|---|---|
| DEN HAAG | 18 JUNI 1992 | EIJKENBOOM T. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)